# EUROPÄISCHE PATENTSCHRIFT

(11) **EP 2 381 234 B1**
(45) Veröffentlichungstag und Bekanntmachung des Hinweises auf die Patenterteilung: **26.06.2019**
(21) Anmeldenummer: 11156686.5
(22) Anmeldetag: 02.03.2011
(51) Int. Cl.: G01L 19/06, B23K 26/32, B23K 26/24, B23K 26/08

(54) **Funktionsbauteil wie Druckmittler mit einer Metallfolie aus Sonderwerkstoff, Verfahren zum Anschweißen einer Metallfolie aus Sonderwerkstoff sowie Laserstrahlschweißeinrichtung hierfür**
Functional component such as a pressure transmitter with a metal film composed of a special material, method for welding a metal film composed of a special material and laser beam welding device for same
Composant fonctionnel comme moyen de mesure de pression doté d'un film métallique en matériau spécial, procédé de soudage d'un film métallique en matériau spécial et dispositif de soudage au rayon laser associé

(30) Priorität: 26.04.2010 DE 102010018377
(43) Veröffentlichungstag der Anmeldung: 26.10.2011
(73) Patentinhaber: Labom Mess- und Regeltechnik GmbH, 27798 Hude (DE)
(72) Erfinder: Rathkamp, Hans Jürgen, 26209, Hatten (DE)
(74) Vertreter: Wasiljeff, Johannes M.B.

(56) Entgegenhaltungen:
- WO-A1-96/05493
- WO-A1-02/077596
- WO-A1-2010/016182
- DE-A1-102007 038 502
- DE-A1-102007 063 456
- DE-T2- 69 919 631
- JP-A- S58 151 534
- US-A- 5 230 248
- US-A1- 2009 188 897
- US-B1- 6 818 857
- H HIRAGA AND AL: "Nd:YAG laser welding of pure titanium to stainless steel", WELDING INTERNATIONAL, Bd. 16, Nr. 8, 31. Dezember 2002 (2002-12-31), Seiten 623-631, XP001125951,

## Beschreibung

Die Erfindung betrifft ein Funktionsbauteil, wie Druckmittler und dergleichen, mit einem metallischen Grundkörper und angeschweißter Metallfolie aus Sonderwerkstoff gemäß dem Oberbegriff des Patentanspruchs 1, eine Laserstrahlschweißeinrichtung zum Anschweißen einer Metallfolie aus Sonderwerkstoff an einem metallischen Grundkörper gemäß dem Oberbegriff des Patentanspruchs 8 sowie ein Verfahren zum Anschweißen einer Metallfolie aus Sonderwerkstoff gemäß dem Oberbegriff des Patentanspruchs 12.

In der Messtechnik werden an Funktionsbauteilen für beispielsweise Temperatur- oder Druckmessungen in Anwendungsfällen bei aggressiven oder korrosiven Messmedien oder bei hohen Temperaturen metallische Sonderwerkstoffe mit besonders guter Korrosionsbeständigkeit eingesetzt. Dabei wird eine Metallfolie aus Sonderwerkstoff, welches mit dem Messmedium in Kontakt kommt, mit einem tragenden Grundkörper verbunden. Der Grundkörper besteht üblicherweise aus einem im Vergleich mit dem Folienwerkstoff kostengünstigeren Werkstoff, bspw. einem Edelstahl.

Auf diese Weise werden beispielsweise Membran-Druckmittler vor Korrosion aufgrund des Kontakts mit dem Messmedium geschützt. Derartige Druckmittler werden unter anderem zur Messung von Füllständen in Flüssigkeitsbehältern eingesetzt, bspw. bei der Herstellung von Lebensmitteln wie z.B. Säften und dergleichen. Druckmittler werden aber auch in verschiedensten Anwendungsfällen für Druckmessungen in aggressiven, korrosiven oder schmutzigen bzw. heißen Fluiden eingesetzt.

Bekannte Druckmittler bestehen aus einem metallischen Grundkörper, der auf einer Seite ein Membranbett und auf einer anderen Seite einen Anschluss für ein Messgerät aufweist. Die Metallfolie aus Sonderwerkstoff ist als Membran vor dem Membranbett angeordnet und mit einer das Membranbett umgebenden Dichtfläche verbunden. Ein Membranraum zwischen Membran und Membranbett ist über einen den Grundkörper durchsetzenden Kanal mit dem Anschluss für das Messgerät fluidisch verbunden.

Das Druckmesssystem besteht dabei aus einem Druckmessgerät, welches an den Anschluss des Druckmittlers angeschlossen ist und über den Kanal im Grundkörper mit dem Membranraum kommuniziert. Der Membranraum enthält eine Druckmittlerflüssigkeit, welche den Prozessdruck auf der außen liegenden Seite der Membran zum Messgerät überträgt.

Viele Einsatzfälle stellen höchste Ansprüche an die Verbindung der Membran mit der Dichtfläche des Grundkörpers des Druckmittlers. Es ist bekannt, Membrane aus Sonderwerkstoffen mit dem Druckmittler zu verkleben. Der Kleber setzt jedoch mit der Zeit Gase frei, welche in die Druckmittlerflüssigkeit diffundieren. Das Altern des Klebers führt zu einer Zerstörung der Verbindung zwischen Membran und Druckmittler und damit letztlich auch zu einer Zerstörung der Membran. Das Entgasen des Klebers wird durch die Temperatur des Messmediums gefördert, so dass der Einsatzbereich verklebter Membranen begrenzt ist.

US 2009/188897 A1 zeigt ein Verfahren zur Herstellung eines Metallbalgs, wie er beispielsweise in implantierbaren Infusionspumpen verwendet wird. Dabei werden einzelne dünne Metallringe aneinander geschweißt, um eine Ring-Faltung zu erzeugen. Die zu verschweißenden Metallringe weisen jedoch dasselbe Material auf, insbesondere Titan.

DE 101 52 681 A1 offenbart einen Druckmittler mit einem Grundkörper, einem Membranbett und einer Membran, wobei die Membran an den Grundkörper angeschweißt ist.

Eine bekannte Schweißtechnik zum Anschweißen von Membranen ist das sog. WIG-Schweißen (Wolfram-Inert-Gas), wobei mit pulsierendem Schweißstrom der zum Anschweißen erforderliche Wärmeeintrag über die Pulsfrequenz oder die Impulshöhe eingestellt wird. Unter dem Wärmeeintrag schmilzt der Membranwerkstoff und auch die anliegende Dichtfläche des Druckmittler wird lokal erwärmt und aufgeschmolzen. Das Schmelzbad erstarrt anschließend zu einer Schweißnaht. Nach dem Anschweißen der Membran aus Sonderwerkstoff wird die Membrankammer zwischen der Membran und dem Membranbett evakuiert, so dass die Membran eng an dem Grundkörper anliegt.

Während des Anschweißvorganges vermischen sich die aufgeschmolzenen Werkstoffe. Die so gebildete Legierung der Schweißnaht ist ein Mischgefüge. Es hat sich beim Anschweißen von Membranen aus Sonderwerkstoffen gezeigt, dass sich bei einigen Sonderwerkstoffen wie bspw. Hastelloy ein Mischgefüge bilden kann, welches zu Korrosion führen kann. Im Einsatz des Druckmittlers kann daher eine solche Schweißnaht oft den regelmäßig hohen Ansprüchen an die Korrosionsbeständigkeit nicht genügen und wird durch Korrosion beschädigt.

Grundsätzlich bekannt ist auch das Verbinden der Membran mit dem Grundkörper des Druckmittlers durch Laserstrahlschweißen. Dabei werden herkömmliche gepulste Laser, bspw. Nd: YAG-Laser, eingesetzt, deren Impulsspitzensleistung zum Aufschmelzen der zu verschweißenden Materialien ausreicht. Jedoch ist auch das gepulste Laserstrahlschweißen ein Schmelzschweißverfahren, wobei die zum Schmelzschweißen erforderliche Wärme durch Umwandlung der Strahlung beim Auftreffen auf das Werkstück durch Absorption erzeugt wird. Auch beim Laserstrahlschweißen kann sich daher ein Mischgefüge bilden, welches, wie bereits beschrieben, für Korrosion anfällig ist.

DE 10 2007 038502 A1 zeigt ein Verfahren und eine Vorrichtung zum Fügen von mindestens zwei Bauteilen mittels Laserstrahlung durch Ausbildung einer Schweißnaht. Dabei werden Parameter, wie Leistung und Richtung des Laserstrahls relativ zur Hauptrichtung sowie Position an der Oberfläche des Werkstücks relativ zu den Positionen entlang der Hauptbahn, derart eingestellt, dass die Schweißkapillaren unabhängig von der Hauptbahn mit veränderlicher Tiefe relativ zur Materialdichte geführt werden. Dadurch lässt sich eine geometrische Form des Schmelzbades und eine geometrische Form des resultierenden Nahtquerschnitt erreichen. Dieses Verfahren eignet sich jedoch nicht für große Vorschubgeschwindigkeiten beim Schweißen.

DE 10 2007 063456 A1 zeigt ein Verfahren zum Schweißverbinden von Werkstücken aus einem metallischen Werkstoff mit einem Laserstrahl, wobei verschiedene Verläufe der Schweißbahnen gezeigt sind.

H HIRAGA AND AL: "Nd:YAG laser welding of pure titanium to stainless steel", WELDING INTERNATIONAL, Bd. 16, Nr. 8, 31. Dezember 2002, Seiten 623-631, XPoo1125951, zeigt eine Studie, bei der Titan mit Edelstahl verschweißt wird. Die Verbindung von zwei verschiedenen Materialien kann zu spröden Schweißverbindungen führen, die nicht luftdicht sind. Das Schweißen erfolgt mit einem gepulsten Nd:YAG-Laser mit verschiedenen Pulsbreiten und Laserenergien.

WO 2010/016182 A1 zeigt eine Laserstrahlschweißeinrichtung zum Anschweißen eines Leiters in einem Deckel eines Batteriegehäuses. Um Schweißspritzer zu vermeiden, die beim Schweißen ins Innere der Batterie fallen könnten, ist für den Schweißvorgang ein Faserlaser vorgesehen. Das Anschweißen erfolgt jedoch mittels eines Tiefschweißverfahrens, bei dem der verdunstende Metalldampf durch die abstoßende Kraft beim aufsteigen des Dampfes eine Schweißkapillare (keyhole) erzeugt.

US 6 818 857 B1 zeigt ein Verfahren sowie eine Vorrichtung zum Schweißen, insbesondere zum Schweißen sehr dünner Abschnitte aus Edelstahl, die zu einem Metallbalg zusammengesetzt werden. Mit dem hier gezeigten Verfahren wird der Schweißvorgang automatisiert, so dass der Herstellungsprozess des Metallbalgs nahezu ohne menschlichen Eingriff möglich ist.

WO 96/05493 A1 zeigt eine alternative Übergangsverbindung für einen Druckmittler, welche mittels Explosionsschweißen erzeugt wird. Dazu wird ein Schweißring erzeugt mit einer Seite aus korrosionsbeständigem Material und einer anderen Seite aus einem anderen Material, wobei die Seiten des Schweißrings jeweils aus einem Material bestehen, welches kompatibel ist zu dem Material mit dem es verschweißt werden soll. Mittels des Schweißrings als Übergangsverbindung lassen sich auch zwei verschiedene Materialien, insbesondere Druckmittlermembran und Druckmittlergehäuse, miteinander Verschweißen, die sonst für Hochtemperatur-Schmelzschweißen im Wesentlichen nicht geeignet sind.

JP 58 151 534 A offenbart einen Druckmittler, bei dem eine aus Tantal hergestellte Membran durch Laserschweißen auf einen metallischen Grundkörper geschweißt ist. Vor dem Verschweißen der Membran wird der Grundkörper in einem weiteren Schweißvorgang durch Auftragsschweißen mit einer Tantalschicht versehen.

WO 02/077596 A1 zeigt ein Verfahren zur Herstellung eines Trennkörpers für einen Drucksensor mit einem Grundkörper aus einem ersten metallischen Material, einer Trennmembran aus einem zweiten metallischen Material und einer ringförmigen Zwischenschicht. Zur Herstellung des Trennkörpers wird die Trennmembran mit der Zwischenschicht verschweißt und die Zwischenschicht anschließend auf den Grundkörper aufgelötet.

US 5 230 248 A zeigt einen korrosionsbeständigen Isolator bei dem eine Isoliermembran aus einem ersten Material an einem Isoliergehäuse aus einem anderen Material befestigt ist. Die Anbringung der Isoliermembran erfolgt über einen Stützring, welcher durch Hartlöten auf den Isolierkörper befestigt wird. Dieser Stützring dient dann als Basis zum Anschweißen der korrosionsbeständigen Membran.

DE 699 19 631 T2 zeigt eine Isoliermembranmontage auf einem Membrandichtungs-Körper, bei der zunächst ein äußerer Membran-Ringabschnitt mit einem äußeren Dichtungskörper-Ringabschnitt verschweißt wird. Anschließend erfolgt eine zweite Verschweißung eines inneren Membran-Ringabschnittes mit einem inneren Dichtungskörper-Ringabschnitt, nachdem ein Differenzialdruck durch die Membran erzeugt wurde, der die Membran zum Dichtungskörper-Ringabschnitt hin verformt. Um zu gewährleisten, dass eine reine legierte Verschweißung entsteht, wird die Membran auf einen Schweißring geschweißt, welcher zuvor mittels einer Verschweißung am Abstützbereich des Dichtungskörper-Ringabschnitts angeschweißt wurde.

EP 0 655 615 B1 sieht eine Verbindung von Membranen aus Sonderwerkstoffen mit dem Grundkörper aus Edelstahl durch Löten vor. Das Verbinden der Membran mit dem Grundkörper geschieht in der Weise, dass auf die Dichtfläche Lot in Form einer Lotpaste oder einer Lotfolie aufgebracht wird, die Membran mit ihrem Randbereich auf die Dichtfläche aufgelegt wird und dann durch Erwärmen des Lots der Randbereich der Membran und die Dichtfläche miteinander verlötet werden. Durch die Erwärmung wird das Lot bzw. die Lotfolie zwischen der Membran und dem Grundkörper verflüssigt, so dass nach dem Erstarren des flüssigen Lots eine Verbindung zwischen der Membran und dem Grundkörper entsteht.

Durch das Verflüssigen allein des Lots kann zwar eine metallisch kontaktierte Verbindung der Membran und des Grundkörpers hergestellt werden ohne die oben beschriebene Gefahr beim Schweißen, dass eine zur Korrosion neigende Legierung der Schweißnaht an der Membran gebildet wird. Jedoch kann im Randbereich der Membran Flüssigkeit an das Lot gelangen oder sogar - sofern sich im Randbereich kein Lot befinden sollte - zwischen die Membran und die Dichtfläche gelangen. Das Lot besteht aus einem anderen Material als die Membran und der Grundkörper, so dass mit der anwesenden Feuchtigkeit ein galvanisches Element gebildet wird und Korrosion einsetzt.

Ein weiterer Nachteil des Lötens der Membran ist daran zu sehen, dass Membrane aus Titan nicht bearbeitbar sind. Da Titanmembrane in vielen Einsatzfällen des Druckmittlers vorteilhaft sind, kann zur Herstellung von Druckmittlern mit Titanmembranen nicht auf das bekannte Lötverfahren zurückgegriffen werden.

Korrosionserscheinungen an der Membran machen regelmäßig einen sofortigen Austausch des gesamten Druckmittlers erforderlich, da bei fortschreitender Korrosion ein Brechen der Membran und ein Austreten des Messmediums die Folge wäre. Zudem kann das Messmedium, welches mit der Membran in Kontakt steht, beeinträchtigt werden.

Der vorliegenden Erfindung liegt nach alledem das Problem zugrunde, ein Funktionsbauteil mit angeschweißter Metallfolie aus metallischem Sonderwerkstoff, ein Verfahren zum Anschweißen einer Metallfolie aus metallischem Sonderwerkstoff an einem metallischen Grundkörper sowie eine Laserstrahlschweißeinrichtung hierfür zu schaffen, welche die Haltbarkeit der angeschweißten Metallfolie wesentlich erhöhen.

Diese Aufgabe wird erfindungsgemäß durch ein Funktionsbauteil mit den Merkmalen des Anspruchs 1, eine Laserstrahlschweißeinrichtung mit den Merkmalen des Anspruchs 8 und ein Verfahren mit den Merkmalen des Anspruchs 12 gelöst.

Erfindungsgemäß wird die Metallfolie aus korrosionsbeständigem Sonderwerkstoff mittels eines Faserlasers mit einem kontinuierlich fortbewegten Laserstrahl nach vorgegebenen Schweißparametern unter Bildung einer Schweißnaht an einer Fügefläche des Grundkörpers derart angeschweißt, dass die Legierung der Schweißnaht im Kontaktbereich zwischen dem Grundkörper und der Metallfolie aus einer lokalen Mischgefügezone besteht und die Schweißnaht im Bereich einer bzgl. des Grundkörpers außen liegenden Oberfläche der Metallfolie keine Bestandteile, insbesondere keine Eisenbestandteile, des Materials des Grundkörpers enthält. Dabei sind die Vorschubgeschwindigkeit und die Strahlintensität des Laserstrahls so abgestimmt, dass der lokale Wärmeeintrag unmittelbar nach dem Aufschmelzen beendet ist und das Schmelzbad aufgrund der hohen Temperaturgradienten mit hoher Abkühlgeschwindigkeit so rasch erstarrt, dass keine Bestandteile des Materials des Grundkörpers bis zu abseits des Grundkörpers liegenden Oberfläche der Metallfolie vordringen. In der Mischgefügezone vermischen sich die Bestandteile des Grundkörpers und der Metallfolie aus korrosionsbeständigem Sonderwerkstoff, so dass sich nach dem Erstarren des Schmelzbades eine stabile Verbindung der aneinander liegenden Oberflächen von Metallfolie und Grundkörper ergibt.

Ein Sonderwerkstoff ist ein Werkstoff, welcher nicht dem Üblichen entspricht, sondern zusätzlich und/oder für einen bestimmten Zweck bestimmt ist. Unter einem korrosionsbeständigen Sonderwerkstoff ist demnach ein Werkstoff mit unüblicher, das heißt besonders guter, Korrosionsbeständigkeit zu verstehen.

Die Erfindung hat erkannt, dass beim Anschweißen einer Metallfolie oder einer Membran aus einem metallischen Sonderwerkstoff an eine Fügefläche eines Grundkörpers, der aus einem anderen, beispielsweise weniger edlen, Metall als der Sonderwerkstoff besteht, ein Faserlaser mit einem kontinuierlich fortbewegten Laserstrahl bei bestimmter Einstellung der Anschweißparameter die beteiligten Metalle innerhalb eines Zeitfensters verschweißen kann, in dem noch keine Bestandteile des Materials des Grundkörpers aus dem flüssigen Schmelzbad an die außen liegende Oberfläche der Metallfolie gelangen kann. An der Oberfläche kommt daher nur der korrosionsbeständige Sonderwerkstoff mit dem Messmedium in Kontakt.

Der erfindungsgemäß eingesetzte Faserlaser wird in einem cw-Modus (cw = continuous wave) betrieben, wobei ein kontinuierlicher Laserstrahl abgegeben wird. Der Wärmeeintrag in das Werkstück wird von der Strahlintensität und der Dauer der Einwirkung bestimmt, welche bei dem erfindungsgemäß kontinuierlich bewegten Laserstrahl von der Geschwindigkeit der Vorschubbewegung abhängt. Unter Strahlintensität ist dabei die Ausgangsleistung des Faserlasers bezogen auf die Wirkfläche zu verstehen, welche folglich im Fokus des Laserstrahls am größten ist. Die Geschwindigkeit der kontinuierlichen Vorschubbewegung und die Strahlintensität des Faserlasers werden derart eingestellt, dass der kontinuierliche Laserstrahl bereits in der vorgesehenen Schweißbahn weitergefahren ist und die Legierung erstarrt, bevor die fernzuhaltenden Materialbestandteile des Grundkörpers an die Oberfläche gelangen können.

Der Erfindung liegt dabei die Erkenntnis zugrunde, dass bei dem bekannten Laserstrahlschweißen einer Membran mit einem gepulsten Laserstrahl der Wärmeeintrag des Laserstrahls etwa einer sinusförmigen Kurve folgt, wobei der zum Aufschmelzen erforderliche Wärmeeintrag nur innerhalb bestimmter Zeitfenster ausreicht. Die Schweißnaht besteht daher aus einer Reihe aufeinanderfolgender Schmelzpunkte. Innerhalb der Zeitfenster, in der ein Wärmeeintrag des Laserstrahls zum Aufschmelzen ausreicht, wird das Schmelzbad durch die zunächst noch weiter ansteigende Leistung des Laserstrahls noch weiter aufgewärmt, so dass sich am Grund des Schmelzbades Eruptionen bilden, welche das Material des Grundkörpers in dem Schmelzbad nach oben schleudern. Das Zeitfenster des gepulsten Lasers ist dabei hinreichend groß, dass die Bestandteile des Grundkörpers bis an die Oberfläche der Membran gelangen und dort ein Mischgefüge bilden. Insbesondere durch Eisen- oder andere Metallbestandteile des Grundkörpers, die in das Mischgefüge an der Oberfläche der herkömmlich verschweißten Membran gelangen, können Korrosionserscheinungen ausgelöst werden.

Die Dauer des Zeitfensters mit ausreichendem Wärmeeintrag zum Aufschmelzen der zu verschweißenden Metalle lässt sich bei gepulstem YAG-Laserstrahl nicht unabhängig von der Leistung steuern, so dass beim herkömmlichen Anschweißen mit gepulsten Lasern im Unterschied zum erfindungsgemäßen Anschweißen ein Mischgefüge an der bezüglich des Grundkörpers außen liegenden Oberfläche des Sonderwerkstoffs nicht zu vermeiden ist.

Der Wärmeeintrag erfolgt aufgrund des erfindungsgemäß kontinuierlich abgegebenen und nicht gepulsten Laserstrahls ebenfalls stetig. Die im Vergleich zu anderen bekannten Lasersystemen ausgesprochen gute Strahlqualität des Faserlasers ermöglicht gemeinsam mit dem kontinuierlichen und hohen lokalen Wärmeeintrag eine hohe Schweißgeschwindigkeit. Dabei entstehen schmale Schweißnähte und Wärmeeinflusszonen, was wiederum zu hohen Temperaturgradienten und entsprechend hohen Abkühlgeschwindigkeiten führt. Da nach dem Aufschmelzen der zu verschweißenden Metalle der Laserstrahl des Faserlasers bereits weiter über dem Werkstück bewegt ist, so dass der lokale Wärmeeintrag abreißt, setzt spontan ein Erstarren des Schmelzbades mit hoher Abkühlgeschwindigkeit ein. Im Kontaktbereich der Metallfolie und dem Grundkörper vermischen sich die geschmolzenen Bestandteile der Metallfolie und des Grundkörpers und bilden eine lokale Mischgefügezone. Der Wärmeeintrag wird nach der Erfindung durch derart gewählte Schweißparameter eingestellt, dass aufgrund des rasch fortschreitenden Erstarrens des Schmelzbades keine Bestandteile des Grundkörpers auf Höhe der außen liegenden Oberfläche der Metallfolie gelangen können, so dass hier ausschließlich der Sonderwerkstoff erstarrt und kein Mischgefüge gebildet wird.

Eine Steuereinrichtung einer Laserstrahlschweißeinrichtung stellt den Faserlaser und die Führung des Laserstrahls nach vorgegebenen werkstoff- und werkstückbezogenen Schweißparametersätzen mit einer derart hohen Geschwindigkeit einer Vorschubbewegung und Strahlintensität ein, dass sich der gewünschte zeitbezogene Wärmeeintrag ergibt. Die werkstoff- und werkstückbezogenen Schweißparametersätze, bei deren Anwendung Materialbestandteile des Grundkörpers von der Oberfläche des Sonderwerkstoffs ferngehalten werden, werden in Versuchen ermittelt und sind in einer Datenbank abgelegt, welche der Steuereinrichtung zugeordnet ist. Die Schweißparametersätze können dabei Angaben zu bestimmten Einstellungen der Laserstrahlschweißeinrichtung oder Zuordnungsvorschriften sein, nach denen sich konkrete Einstellungsparameter für die Laserstrahlschweißeinrichtung ermitteln lassen.

Die Schweißparametersätze werden für verschiedene Materialkombination der Membran und des Werkstücks und unterschiedliche Dimensionierungen entsprechend dem Fertigungsbedarf im Vorfeld ermittelt und in der Datenbank abgespeichert. Dabei kann neben den beteiligten Materialien des Grundkörpers und der Membran sowie der Membrandicke der gewünschte Nahtverlauf in den Schweißparametersätzen berücksichtigt werden.

Für die fertigungstechnische Umsetzung der Schweißparameter kann eine der den Wärmeeintrag bestimmenden Größen konstant gesetzt werden und ein entsprechender Schweißparametersatz abgespeichert werden. Bei einer fest gegebenen Strahlintensität wird beispielsweise dem einschlägigen Schweißparametersatz die für das erfindungsgemäße Anschweißen vorgegebene Vorschubgeschwindigkeit entnommen.

Mit dem erfindungsgemäßen Anschweißen der Metallfolie aus korrosionsbeständigem Sonderwerkstoff kann ein Grundkörper wirksam vor Korrosion durch das Messmedium geschützt werden. Der Sonderwerkstoff kann dabei ein edleres Metall als der Grundkörper sein, also ein elektrochemisch höheres Potential aufweisen. Der Sonderwerkstoff kann auch ein passivierendes Metall sein, welches in korrosiver Umgebung nichtmetallische Schutzschichten bildet und sich bei der Korrosion quasi wie ein Edelmetall verhält. Mit dem Faserlaser mit kontinuierlichem Laserstrahl können Membranen aus den meisten Sonderwerkstoffen bearbeitet werden. Bevorzugte Sonderwerkstoffe sind Hastelloy, Titan, Monel, Tantal, Nickel oder dergleichen.

Das Funktionsbauteil ist in einer bevorzugten Ausführungsform ein Druckmittler, der auf einer Seite ein Membranbett und auf einer anderen Seite einen Anschluss für ein Messgerät aufweist. Die Metallfolie aus Sonderwerkstoff ist als Membran vor dem Membranbett angeordnet und ist an eine das Membranbett umgebende Fügefläche angeschweißt. Ein Membranraum zwischen Membran und Membranbett steht dabei über einen den Grundkörper durchsetzenden Kanal mit dem Anschluss für ein Messgerät in fluidischer Verbindung. Nur die Membran aus Sonderwerkstoff steht dabei in Kontakt mit dem gegebenenfalls stark korrosiven Messmedium und überträgt den Druck über den Membranraum hydraulisch zum Messgerät. Auch bei einer dünnen Membran eines Druckmittlers und der entsprechend kurzen Entfernung zwischen Grundkörper und Membranoberfläche kann der Wärmeeintrag durch den kontinuierlich fortbewegten Faserlaserstrahl so genau nach den vorgegebenen Schweißparametern dosiert werden, dass Bestandteile des Grundkörpers in der flüssigen Schmelze nicht zur Membranoberfläche gelangen.

In einer bevorzugten Ausführungsform der Erfindung ist der Faserlaser in seiner Ausgangsleistung einstellbar und wird von der Steuereinrichtung in Abstimmung mit der Geschwindigkeit der Vorschubbewegung derart eingestellt, dass das Schmelzbad in einer so kurzen Zeitspanne entsprechend der hohen Abkühlgeschwindigkeit erstarrt, dass noch keine Bestandteile des Grundkörpers an die Oberfläche der Membran gelangt sind. In den vorgegebenen werkstoff- und werkstückbezogenen Schweißparametersätzen sind entsprechend Angaben über die Geschwindigkeit der Vorschubbewegung und unterschiedliche Ausgangsleistungen des Faserlasers verknüpft. Die variable Ausgangsleistung beeinflusst dabei die Intensität des Laserstrahls, so dass der Wärmeeintrag auch unabhängig von der Vorschubgeschwindigkeit über den Parameter der Ausgangsleistung gesteuert werden kann.

Als weitere Größe zur Steuerung des Wärmeeintrags des Faserlasers derart, dass das Grundkörpermaterial nicht an die Oberfläche des Schmelzbads gelangen kann, wird in einer weiteren Ausführungsform der Erfindung die Strahlintensität des Laserstrahls über eine variable Einstellung seines Fokus gesteuert. Dabei kann sowohl der Durchmesser als auch die Lage des Fokus oder auch eine Kombination aus diesen beiden Parametern gesteuert werden. Sowohl der Durchmesser des Fokus als auch die Fokuslage, also ein Abstand des Fokus zum Werkstück, bestimmen die Energiedichte des Laserstrahls im vorgesehenen Schweißbereich, so dass in Abstimmung mit der Vorschubgeschwindigkeit der Wärmeeintrag steuerbar ist. Unter Energiedichte ist dabei der Wärmeeintrag pro Fläche zu verstehen. Die fertigungstechnische Umsetzung der Fokussteuerung erfolgt über eine entsprechende Ansteuerung einer Fokussieroptik durch die Steuereinrichtung. Die Fokussieroptik umfasst dabei Mittel zur Einstellung von Lage und/oder Durchmesser des Fokus des Laserstrahls, welche von der Steuereinheit angesteuert werden.

Die Steuerung des Wärmeeintrags mit der Wirkung des Fernhaltens von Grundkörperbestandteilen von der Oberfläche der Membran kann durch geeignete Einstellung der Vorschubgeschwindigkeit, der Ausgangsleistung des Lasers, die Lage und/oder den Durchmesser des Strahlfokus oder jede Kombination dieser steuerbaren Größen erfolgen.

Um eine möglichst schnelle Fortbewegung des Laserstrahls auf der Oberfläche des Werkstücks zu realisieren, ist vorteilhaft eine Laseroptik mit mindestens einem steuerbaren Scannerspiegel zur Lenkung des Laserstrahls auf dem Werkstück vorgesehen. Anstelle eines auf mehreren Spiegelachsen bewegbaren Scannerspiegels kann die Laseroptik auch mit zwei oder mehr Scannerspiegeln ausgestattet sein, welche um jeweils eine Spiegelachse bewegbar sind. Die nahezu trägheitslosen Spiegelachsen ermöglichen sehr hohe Positioniergeschwindigkeiten. Die für das erfindungsgemäße Laserstrahlanschweißen einer Membran einzustellende hohe Schweißgeschwindigkeit, deren konkrete Größe von den werkstoff- und werkstückbezogenen Schweißparametern im konkreten Anwendungsfall abhängt, kann durch die Verwendung von scannenden Optiken bei der erfindungsgemäßen Lasermaterialbearbeitung erreicht werden.

Zusätzlich zur Verwendung einer scannenden Laseroptik mit einem oder mehreren einstellbaren Scannerspiegeln kann die Bewegungseinrichtung der erfindungsgemäßen Laserstrahlschweißeinrichtung mit mechanischen Vorschubeinrichtungen einer Bearbeitungsmaschine gekoppelt sein. Dabei kann nach dem Prinzip einer feststehenden Optik das Werkstück mit seiner Werkstückaufnahme bewegt werden oder nach dem Prinzip einer fliegenden Optik der Laserkopf über dem Werkstück verfahren werden. Die feststehende Optik und die fliegende Optik können auch koordiniert und gemeinsam eingesetzt werden und bilden mit der scannenden Laseroptik ein Hybridsystem.

Mit dem erfindungsgemäßen Anschweißen einer Membran an der Fügefläche eines Grundkörpers aus unedlerem Metall kann ein Druckmittler mit optimaler Haltbarkeit seiner Membran hergestellt werden, da die Membran in ihrer außen liegenden Oberfläche auch im Bereich der Schweißnaht keine Fremdbestandteile in dem Sonderwerkstoff enthält. Mit dem Faserlaser mit kontinuierlichem Laserstrahl können Membrane aus den meisten Sonderwerkstoffen bearbeitet werden.

In einer bevorzugten Ausführungsform der Erfindung verläuft die Schweißnaht derart, dass Abschnitte einer durchlaufenden Bahn der Schweißnaht auf der Fügefläche nebeneinander liegen. Aufgrund der herausragenden Strahlqualität und der hohen Schweißgeschwindigkeit entstehen schmale Schweißnähte, so dass mit einer Vielzahl nebeneinanderliegender Schweißnähte eine im Wesentlichen eben erscheinende Fläche entsteht. Vorteilhaft kann dabei die Membran mit einem entsprechenden Verlauf der Schweißnaht über die gesamte Fügefläche angeschweißt sein, insbesondere indem sich die Schweißnaht über die gesamte Fügefläche erstreckt. Auf diese Weise kann jeder denkbare Grundkörper mit einer Membran aus edlerem Werkstoff mit einer ebenen Oberfläche plattiert werden. Vorteilhaft ist dies bei jeder Art von Messgerät, welches mit einem aggressiven Medium in Kontakt kommt. Dies können neben Druckmessgeräten auch Temperaturmessgeräte sein.

Eine ebene, plattierte Oberfläche der angeschweißten Membran ist gegeben, wenn die Schweißnaht in einer Bahn angebracht ist, welche um einen Mittelpunkt der ringförmigen Fügefläche spiralförmig gewundenen ist. Alternativ kann der Laserstrahl auch in konzentrischen Kreisen über die Membran und die darunter liegende Fügefläche geführt werden.

In einer weiteren vorteilhaften Ausführungsform der Erfindung wird die Schweißnaht in einer schlaufenförmigen, insbesondere mäanderartigen Bahn angebracht. Die Schlaufen erstrecken sich dabei radial auf der runden Membran bzw. der darunter liegenden Fügefläche, so dass die radialen Abschnitte der Bahnschlaufen nebeneinander liegen. Die dünnen, nebeneinander liegenden Abschnitte der Schweißbahnen sorgen für ein ansprechendes, absolut ebenes Erscheinungsbild der mit Sonderwerkstoff plattierten Fläche.

Besonders bevorzugt wird bei dem Anschweißen einer Membran eines Druckmittlers die Membran zunächst mit einer am äußeren Umfang der Fügefläche umlaufenden Dichtnaht am Grundkörper angeschweißt. Die Dichtnaht ermöglicht ein anschließendes Evakuieren des Membranraums des Druckmittlers, wobei sich die Membran aufgrund des Unterdrucks über die gesamte Fügefläche an den Grundkörpers anlegt. In diesem Zustand wird die Membran durch Laserschweißen mit dem Faserlaser entlang in einer um einen Mittelpunkt der Fügefläche spiralförmig gewundenen Bahn angebracht. Die Bewegung des Laserstrahls auf dem Werkstück beginnt im Bereich eines inneren Unfangs der Fügefläche. Dadurch wird der Bildung radialer Zugspannungen beim Abkühlen der angeschweißten Membran entgegen gewirkt. Solche Zugspannungen können bei Membranen, die oft mit beispielsweise konzentrischen Sicken ausgebildet sind, zu einem ungewünschten Verflachen der Sicken aufgrund eines Ausgleichs der Zugspannungen durch Dehnung der Sicken führen. Geringe Zugspannungen durch Abkühlen der Membran sind zwischen den nebeneinander liegenden umlaufenden Bahnen der Schweißnaht zwar nicht vollständig auszuschließen. Jedoch wird durch Bewegung des Laserstrahls vom inneren zum äußeren Umfang der Fügefläche ein Addieren der geringen Einzelzugspannungen zu einer beachtlichen Summe verhindert.

Mit einer angeschweißten Metallfolie aus Sonderwerkstoff können gemäß einer weiteren Ausführungsform der Erfindung stabförmige Messfühler ausgestattet werden, welche in das Messmedium eintauchen. Die Metallfolie aus Sonderwerkstoff ist dabei hülsenförmig gestaltet und wird als Überzug über den Messfühler gestreift und an dem Grundkörper des Messfühlers angeschweißt. Dabei kann eine ringförmige Fügefläche an der Wurzel der überzugartigen Schutzhülse aus Sonderwerkstoff ausgebildet sein oder die Schutzhülse an dem Messfühler umlaufend geschweißt werden.

Ausführungsbeispiele der Erfindung sind nachstehend der Zeichnung näher erläutert. Es zeigen:
- Fig. 1: eine schematische Darstellung einer Laserstrahlschweißeinrichtung zum Anschweißen einer Membran eines Druckmittlers,
- Fig. 2: eine vergrößerte Schnittansicht des Druckmittlers nach Fig. 1 im Bereich der Schweißnaht,
- Fig. 3: ein Ablaufschema der Einstellung der Schweißparameter zum Anschweißen einer Membran aus Sonderwerkstoff,
- Fig. 4: eine Draufsicht eines Druckmittlers mit angeschweißter Membran,
- Fig. 5: einen Ausschnitt einer Schweißnaht,
- Fig. 6: eine Draufsicht eines weiteren Ausführungsbeispiels eines Druckmittlers mit angeschweißter Membran und
- Fig. 7: eine Seitenansicht eines Temperaturmessers mit angeschweißter Schutzhülse aus Sonderwerkstoff.

In den Zeichnungsfiguren ist für jeweils gleiche Bauteile die jeweils gleiche Bezugszahl verwendet.

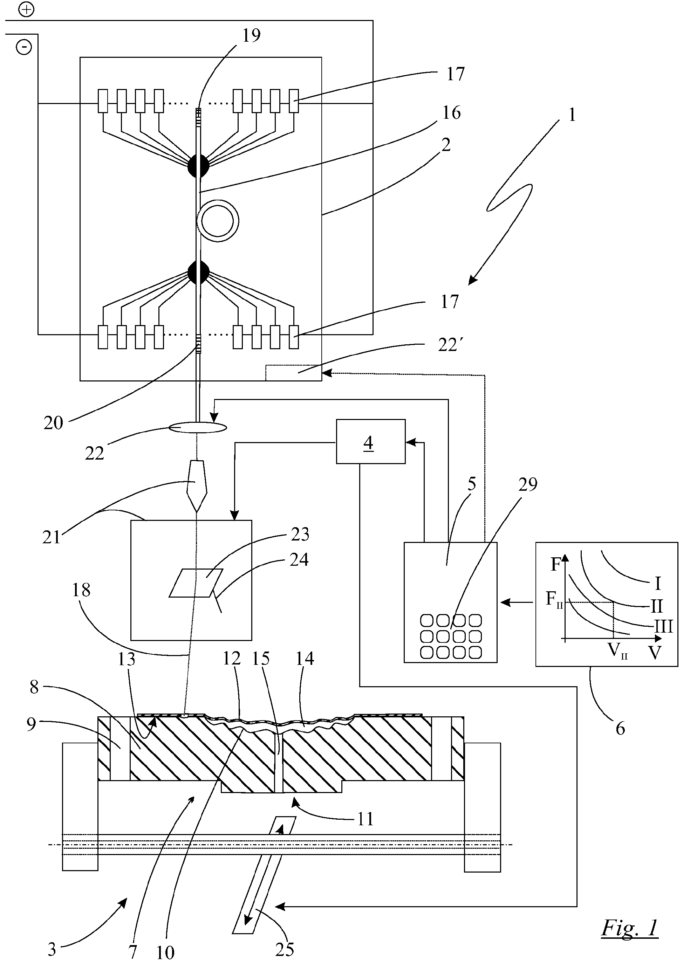

Fig. 1 zeigt eine Laserstrahlschweißeinrichtung 1 mit einem Faserlaser 2, einer Werkstückaufnahme 3, einer steuerbaren Bewegungseinrichtung 4 zur Ausführung einer Vorschubbewegung sowie einer auf die Bewegungseinrichtung 4 wirkende Steuereinrichtung 5. Der Steuereinrichtung 5 ist eine Datenbank 6 zugeordnet, in der vorgegebene werkstoff- und werkstückbezogene Schweißparametersätze I, II, III abgespeichert sind.

Die Laserstrahlschweißeinrichtung 1 ist für das Anschweißen einer Membran aus einem metallischen Sonderwerkstoff an ein Werkstück aus einem anderen Metall als dem Membranwerkstoff ausgelegt.

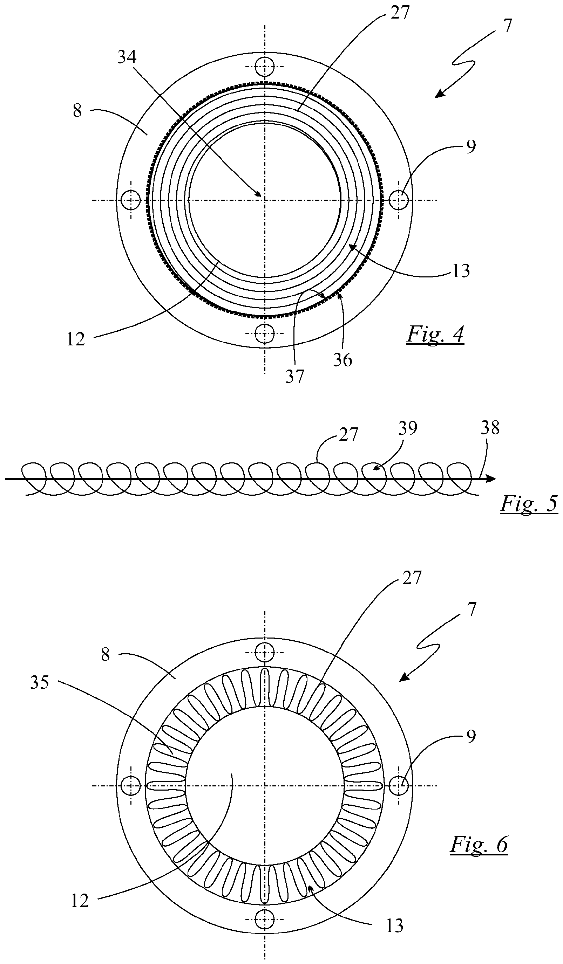

Das Werkstück ist ein Druckmittler 7, der zur Messung eines Füllstands in einem nicht dargestellten Flüssigkeitsbehälter eingesetzt wird. Der Druckmittler 7 umfasst einen flanschartigen Grundkörper 8, welcher im gezeigten Ausführungsbeispiel zylindrisch ausgestaltet ist und an seinem Umfang Durchgangslöcher 9 zur Verschraubung des Druckmittlers 7 an dem Flüssigkeitsbehälter versehen ist (vgl. Fig. 4, 5). Der Grundkörper 8 besteht aus einem korrosionsbeständigen Edelstahl.

Der Grundkörper 8 weist auf der einen Stirnseite ein Membranbett 10 und auf der andere Stirnseite einen Anschluss 11 für ein nicht dargestelltes Messgerät auf. Vor dem Membranbett 10 ist eine kreisförmige Membran 12 angeordnet, welche aus einem metallischen Sonderwerkstoff besteht, der eine höhere Korrosionsbeständigkeit aufweist als der Werkstoff des Grundkörpers 8. Der Sonderwerkstoff kann dabei ein edleres Metall als der Grundkörper sein, so dass die Membran ein höheres Potential als das zu schützende Werkstück aufweist. Der Sonderwerkstoff kann auch ein passivierendes Metall sein, welches in korrosiver Umgebung nichtmetallische Schutzschichten bildet und sich bei der Korrosion quasi wie ein Edelmetall verhält. Im vorliegenden Ausführungsbeispiel besteht die Membran 12 aus Hastelloy. Die Membran 12 ist an eine das Membranbett 10 umgebende, ringförmige Fügefläche 13 in unten beschriebener Weise angeschweißt.

Die Membran 12 versiegelt einen Membranraum 14 zwischen dem Membran 12 und dem Membranbett 10. Der Membranraum 14 steht über einen den Grundkörper 8 durchsetzenden Kanal 15 mit dem Anschluss 11 für das Messgerät in fluidischer Verbindung. Vor dem Einsatz des Druckmittlers wird der Membranraum 14 mit einer Druckmittlerflüssigkeit, bspw. einem Öl, befüllt. Die Druckmittlerflüssigkeit überträgt hydraulisch druckbedingte Auslenkungen der Membran 12 auf das angeschlossene Messgerät.

Der Faserlaser 2 enthält eine Glasfaser 16 als aktives Medium, deren Kern mit geringen Mengen eines aktiven Materials dotiert ist, bspw. Ytterbium. Der Faserlaser 2 wird optisch gepumpt, indem im Ausführungsbeispiel seriell geschaltete und in Dioden-Arrays angeordnete Laserdioden 17 in die Glasfaser 16 eingekoppelt sind. Das Laserlicht, welches durch die Glasfaser 16 geleitet wird, erfährt aufgrund der großen Länge der Glasfaser 16 eine sehr hohe Verstärkung. Durch die besonders enge Führung des Laserlichts in der Glasfaser 16 wird eine gegenüber anderen Lasersystemen deutlich bessere Strahlqualität des Laserstrahls 18 erzielt.

Der Faserlaser 2 umfasst an seinen Endflächen zwei Spiegel 19, 20, welche einen Resonator bilden und somit einen kontrollierten Laserbetrieb gewährleisten. Dabei ist einer der Spiegel als hoch reflektierender Spiegel 19 ausgebildet, während der andere Spiegel als Auskoppelspiegel 20 teildurchlässig ist, so dass der Laserstrahl 18 zu einer Laseroptik 21 abgegeben wird.

Der Faserlaser 2 ist ein sog. cw-Laser (cw = continuous wave) und gibt einen kontinuierlichen Laserstrahl 18 ab. Die Laserstrahlschweißeinrichtung 1 umfasst eine Fokussieroptik 22, welche Mittel zur Einstellung von Lage und Durchmesser des Fokus des Laserstrahls 18 aufweist. Die Fokussieroptik 22 ist über eine Steuerleitung mit der Steuereinheit 5 verbunden und wird von der Steuereinheit 5 nach den vorgegebenen werkstoff- und werkstückbezogenen Schweißparametersätzen I, II, III so angesteuert, dass sich die gewünschte Lage und/oder Durchmesser des Fokus des Laserstrahls 18 ergibt.

Im gezeigten Ausführungsbeispiel ist auch die Ausgangsleistung des Faserlasers 2, mit dem der Laserstrahl 18 Energie in das Werkstück einträgt, durch die Steuereinheit 5 einstellbar. Hierfür ist eine schematisch dargestellte Stelleinrichtung 22' vorgesehen. Die Veränderung der Ausgangsleistung kann bspw. durch Leistungsskalierung erfolgen. Dabei können in dem Faserlaser 2 mehrere aktive Glasfasern vorgesehen sein, wobei zum Erhalten einer n-fachen Leistung des Faserlasers die Faserenden von einer Anzahl von n gleichen Lasern so kombiniert werden, dass die Ausgangsstrahlen zu einem Strahl verschmelzen. Eine Veränderung der Ausgangsleistung kann auch durch Zu- oder Abschaltung einzelner Pumpdioden 17 des Faserlasers 2 vorgenommen werden. Über die Einstellung der Ausgangsleistung des Faserlasers 2 ist die Strahlintensität des Laserstrahls von der Steuereinheit 5 bestimmbar.

Die Laseroptik 21 weist einen oder mehrere steuerbare Scannerspiegel 23 zur Lenkung des Laserstrahls 18 auf dem Werkstück auf. Die nahezu trägheitslose Spiegelachse 24 des Scannerspiegels 23 ermöglicht hohe Positioniergeschwindigkeiten des Laserstrahls 18. Die scannende Laseroptik 21 ist Bestandteil der Bewegungseinrichtung 4, welche den kontinuierlichen Vorschub bei der Schweißbearbeitung realisiert. Um die Scannerspiegel 23 vor einer Beschädigung durch eine zu hohe Energiedichte des auftreffenden Laserstrahls 18 zu schützen, kann der Laserstrahl 18 nach dem Verlassen des Faserlasers 2 zunächst aufgeweitet werden, um anschließend von der Fokussieroptik 22 auf die vorgesehenen Fokusparameter eingestellt zu werden. Auf diese Weise ist die Energiedichte des Laserstrahls 18 beim Auftreffen auf einen Scannerspiegel 23 reduziert.

Die Bewegungseinrichtung 4 ist im vorliegenden Ausführungsbeispiel als Hybridsystem ausgelegt, wobei neben der scannenden Laseroptik 21 eine Fahreinrichtung 25 an der Laserstrahlschweißeinrichtung 1 vorgesehen ist. Die Fahreinrichtung 25 ist im vorliegenden Ausführungsbeispiel der Maschinentisch der Werkstückaufnahme 3. Dabei werden durch den Maschinentisch größere Verfahrbewegungen ermöglicht, während mittels der scannenden Laseroptik 21 sowohl feine als auch schnelle Bewegungen möglich sind.

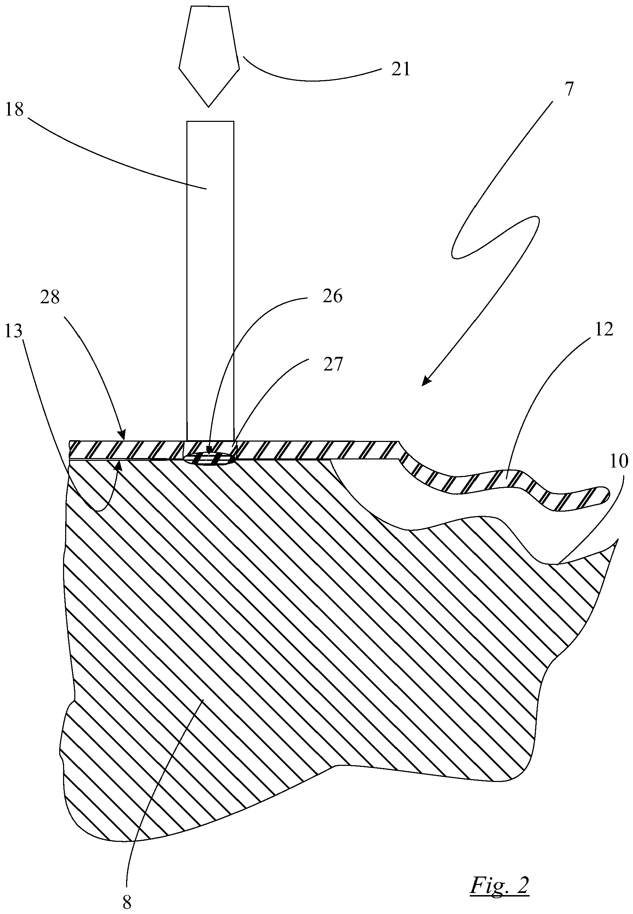

Der Faserlaser 2 wird mit einer solchen Ausgangsleistung und Einstellung des Fokus betrieben, dass der Laserstrahl 18 mit einer Strahlintensität entsprechend der Ausgangsleistung beim Auftreffen auf das Werkstück die Membran 12 lokal aufschmilzt und in dem darunter liegenden Grundkörper 3 ein Schmelzbad erzeugt (Fig. 2). In dem Schmelzbad bildet sich im Kontaktbereich zwischen Grundkörper 8 und Membran 12 eine lokale Mischgefügezone 26, in denen sich die geschmolzenen Werkstoffe des Grundkörpers 8 und der Membran 13 vermischen, so dass sich nach dem Erstarren des Schmelzbades eine stabile Verbindung der aneinander liegenden Oberflächen von Membran 12 und Grundkörper 8 ergibt.

Aufgrund der kontinuierlichen Bewegung des Laserstrahls 18 reißt der lokale Wärmeeintrag rasch ab, so dass augenblicklich das Schmelzbad zu erstarren beginnt und eine Schweißnaht 27 entsteht, welche im Bereich der Mischgefügezone 26 aus einer Legierung des Edelstahls des Grundkörpers 8 und der Membran 12 aus Hastelloy besteht. Die Schweißnaht 27 befestigt die Membran 12 über die Mischgefügezone 26 materialschlüssig an der Fügefläche 13 des Druckmittlers 7.

Der Wärmeeintrag durch den Laserstrahl 18 entsprechend der Vorschubgeschwindigkeit und der Strahlintensität wird so abgestimmt, dass der lokale Wärmeeintrag unmittelbar nach dem Aufschmelzen beendet ist und das Schmelzbad aufgrund der hohen Temperaturgradienten mit hoher Abkühlgeschwindigkeit so rasch erstarrt, dass keine Bestandteile des Materials des Grundkörpers 8 bis zur abseits des Grundkörpers 8 liegenden Oberfläche 28 der Membran 12 vordringen.

Das Volumen des Schmelzbades zwischen der lokalen Mischgefügezone 26 und der Oberfläche 28 erstarrt, ohne dass Bestandteile des Grundkörpermaterials eindringen. Auf diese Weise besitzt die Membran 12 auch nach dem Anschweißen an den Grundkörper 8 im Bereich der Schweißnaht 27 eine durchgehende Oberfläche aus dem metallischen Sonderwerkstoff. In dem Volumen zwischen der lokalen Mischgefügezone 26 und der Oberfläche 28 der Membran 12 besteht die Schweißnaht 27 aus demselben Material wie die Membran, was in der Zeichnung durch die Verwendung gleicher Schraffuren hervorgehoben ist. Die Membran 12 weist daher auch nach dem Anschweißen die optimalen chemischen und physikalischen Eigenschaften für den jeweiligen Einsatzfall entsprechend dem gewählten Sonderwerkstoff auf.

Das erfindungsgemäße Anschweißen der Membran 12 mittels eines Faserlasers derart, dass die Schweißnaht 27 im Bereich der Oberfläche 28 der Membran 12 keine Bestandteile des Materials des Grundkörpers 8 enthält, ist durch die Kombination der hohen Geschwindigkeit des Wärmeeintrags und dem kontinuierlichen Wärmeeintrag möglich. Der Wärmeeintrag kann genau so abgestimmt werden, dass keine Eruptionen am Grund des Schmelzbads durch zu hohe Strahlintensität entstehen. Das Anschweißen der Membran 12 erfolgt dabei nach vorgegebenen werkstoff- und werkstückbezogenen Parametersätzen für die Einstellung der Laserstrahlschweißeinrichtung, mit denen das gewünschte rasche Erstarren des aufgeschmolzenen Volumens zwischen der Oberfläche 28 und der Mischgefügezone 26 im Kontaktbereich des Grundkörper 8 mit der Membran 12 erreicht wird. Die genaue Einstellung und Abstimmung der Schweißparameter, bei denen die Erstarrung des Schmelzbades im Bereich der Oberfläche 28 der Membran 12 bereits vor Eindringen von Grundkörpermaterial einsetzt, wird in Versuchen für bestimmte Werkstoffkombinationen bzw. Membrandicken ermittelt. Die optimalen Schweißparametersätze sind in der Datenbank 6 abgelegt, auf die die Steuereinheit 5 (Fig. 1) Zugriff hat.

Der Steuereinheit 5 ist über ein Tastenfeld 29 eingebbar, aus welchem Werkstoff die anzuschweißende Membran 12 besteht und welche Dicke sie hat. Die Steuereinheit kann dabei so programmiert sein, dass lediglich eine Kurzbezeichnung einzugeben und die Steuereinheit 5 dieser Eingabe die zugehörigen Werkstückparameter zuordnet. In der Datenbank 6 sind Schweißparametersätze entsprechend der Eingabe abgelegt. Die Schweißparametersätze sind Kennlinien bzw. Kennfelder, bei denen die Strahlintensität des Faserlasers 2 in Beziehung gesetzt ist mit der Vorschubgeschwindigkeit V, mit der der Laserstrahl 18 über die Membran 12 bewegt wird. Gezeigt sind drei Schweißparametersätze I, II, III, welche eine Vielzahl von Schweißparametersätzen repräsentieren sollen.

Im gezeigten Ausführungsbeispiel wird die Strahlintensität des Laserstrahls 18 über die Lage und den Durchmesser des Fokus eingestellt. Die Strahlintensität des Laserstrahls kann auch über eine Variation nur eines der Fokusparameter (Lage und Durchmesser) eingestellt werden. Durch eine Kombination der Fokusparameter ergibt sich jedoch eine genauere Einstellbarkeit der Strahlintensität und ein höherer Freiheitsgrad bei der Gestaltung der Laserschweißnaht. In den Schweißparametersätzen I, II, III ist die Strahlintensität des Laserstrahls 18 durch die Fokusparameter F des Laserstrahls 18 repräsentiert. Für einen Schweißparametersatz II ergibt sich danach für eine bestimmte Kombination der Fokusparameter F_{II} des eine bestimmte Vorschubgeschwindigkeit V_{II} für den Laserstrahlvorschub, bei der während des Anschweißens kein Material des Grundkörpers 8 bis zur Oberfläche der Membran 12 vordringt. Alternativ können die Schweißparameter für das erfindungsgemäße Anschweißen der Membran in einem Kennfeld bei gegebenenfalls gleichen Vorschubgeschwindigkeiten als Variable eines der beiden Fokusparameter für die jeweiligen Werkstoff- und Werkstückkombinationen abgespeichert sein.

Alternativ zu den Fokusparametern oder zusätzlich enthalten die Schweißparametersätze Angaben über die Ausgangsleistung des Faserlasers 2, mit denen die Stelleinrichtung 22 für die Ausgangsleistung derart angesteuert wird, dass sich eine bestimmte Strahlintensität ergibt. Der Wärmeeintrag für das erfindungsgemäße Anschweißen der Membran kann auch über ein Kennfeld mit Kombinationen von Angaben über die Ausgangsleistung mit der Variation der Lage und/oder der Fläche des Fokus des Laserstrahls gesteuert werden

Die Steuereinheit 5 steuert entsprechend den Vorgaben der Schweißparametersätze die Bewegungseinrichtung 4, insbesondere die scannende Laseroptik 23, sowie die Fokussieroptik 22 und gegebenenfalls die Stelleinrichtung 22' für die Ausgangsleistung des Faserlasers 2 an. Für die Ansteuerung der scannenden Laseroptik 23 enthält die Datenbank 6 auch Angaben über die Richtung der Bewegung und dem entsprechenden Verlauf der Schweißnaht.

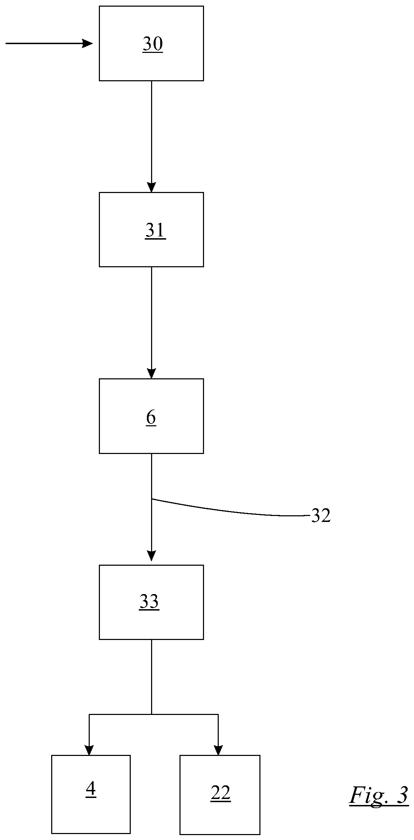

Wie Fig. 3 veranschaulicht, erfolgt beim Anschweißen der Membran in einem ersten Schritt eine Eingabe 30 der vorgesehenen Kombination aus Grundkörper und Membran. In einem zweiten Schritt 31 ermittelt die Steuereinheit aus den Eingabedaten, welche Werkstoffe verschweißt werden sollen und welche Dicke die Membran aus dem Sonderwerkstoff aufweist.

Entsprechend der erkannten Werkstoff- bzw. Werkstückkombinationen adressiert die Steuereinheit die Datenbank 6 und liest den für die jeweilige Schweißsituation im Voraus ermittelten Schweißparametersatz 32 aus. Aus dem optimalen Schweißparametersatz 32 werden in einem Ausgabeschritt 33 entsprechende Befehle für die Stelleinrichtungen der Laserschweißeinrichtung mit Wirkung auf den Wärmeeintrag ermittelt und weitergeleitet. Im gezeigten Ausführungsbeispiel wird entsprechend dem ausgelesenen Schweißparametersatz 32 die Bewegungseinrichtung 4, also insbesondere die scannende Laseroptik 23 (Fig. 1) zur Steuerung des Fokus, sowie die Stelleinrichtung 22 für die Ausgangsleistung des Faserlasers 2 angesteuert.

Die Schweißparametersätze der Datenbank enthalten auch Angaben über den Verlauf der Schweißnaht, so dass die Bewegungseinrichtung 4 entsprechend angesteuert wird. Die Fig. 4 und 6 zeigen Draufsichten auf die mit der Membran 12 ausgestattete Stirnseite des Druckmittlers 7. In beiden Ausführungsbeispielen verläuft die Schweißnaht 27 in einer durchlaufenden Bahn. Dabei ist die Membran 12 über die gesamte ringförmige Fügefläche 13 angeschweißt. Das flächige Verbinden wird erreicht, indem die schmalen Schweißnähte 27 abschnittsweise auf der Fügefläche 13 nebeneinander angebracht werden.

Im Ausführungsbeispiel nach Fig. 4 ist das Nebeneinanderliegen der Schweißnahtabschnitt durch einen spiralförmig um einen Mittelpunkt 34 der Fügefläche 13 gewundenen Verlauf der Schweißnaht 27 erreicht. Alternativ kann die Schweißnaht 27 in konzentrischen Kreisen auf der Fügefläche 13 angebracht sein.

Im Ausführungsbeispiel nach Fig. 6 ist die Schweißnaht in einer schlaufenförmigen Bahn angebracht. Die Schlaufen 35 erstrecken sich dabei etwa radial auf der Fügefläche 13, so dass die einzelnen Abschnitte der Schweißnaht größtenteils neben anderen Schweißnahtabschnitten liegen.

Für das Anschweißen der Membran 12 über die gesamte Fügefläche 13 ist eine lange Schweißnaht 27 erforderlich, welche jedoch aufgrund der hohen Arbeitsgeschwindigkeit des Faserlasers sehr rasch hergestellt werden kann. Durch die Vielzahl aneinander liegender Schweißnahtabschnitte erscheint die Oberfläche der Membran 12 sehr eben. Die Fügefläche 13 wird geradezu mit der aufliegenden Membran 12 plattiert, wobei die Schweißnaht 27 nahezu unsichtbar ist.

Zum Anschweißen der Membran 12 an den Grundkörper 8 eines Druckmittlers gemäß Fig. 4 wird die Membran in einem ersten Schritt mit einer Haltenaht 36 am äußeren Umfang der ringförmigen Fügefläche 13 befestigt. Die Haltenaht 36 kann dabei umlaufend am Umfang der Fügefläche 13 angebracht werden. Die Haltenaht 36 wird durch Wolfram-Inertgasschweißen (WIG-Schweißen) oder ein ähnliches Schweißverfahren angebracht. Nach dem Fixieren der Membran 12 durch die Haltenaht 36 wird neben der Haltenaht 36 eine umlaufende Dichtnaht 37 mittels des Faserlasers angebracht. Die umlaufende Dichtnaht 37 dichtet den eingeschlossenen Bereich ab und ermöglicht ein anschließendes Evakuieren des Membranraums 14 (Fig. 1), welcher zwischen der Membran 12 und dem Membranbett 10 des Druckmittlers eingeschlossen ist. Die Evakuierung erfolgt über den Kanal, welcher den Grundkörper 8 durchsetzt und im Betreib des Druckmittlers der Druckübertragung über eine Druckmittlerflüssigkeit dient. Durch das Evakuieren des Membranraums und die entstehenden Druckverhältnisse legt sich die Membran 12 flächig an die Fügefläche 13 und das Mambranbett 10 an.

In einem anschließenden Schritt wird die Membran 12 beginnend im Bereich eines inneren Unfangs der Fügefläche 13 entlang in einer um den Mittelpunkt 34 der Fügefläche 13 spiralförmig gewundenen Bahn angebracht. Vor dem Beginn des Anbringens der spiralförmig gewundenen Bahn wird vorteilhaft eine kreisförmige, geschlossen umlaufende Dichtnaht am inneren Umfang der Fügefläche 13 angebracht, wodurch ein ringförmiger Abschnitt hermetisch abgeschlossen wird, bevor die Membran 13 durch die spiralförmige Bahn plattiert wird.

Fig. 5 zeigt eine vergrößerte Darstellung der Schweißnaht 17, mit welcher die Membran angeschweißt wird. Die Schweißnaht 27 verläuft in einer Vielzahl aneinander gereihter Schlaufen 38 entlang der vorgesehenen Vorschubbahn 39 folgen. Die Vorschubbahn 38 verläuft im Ausführungsbeispiel gemäß Fig. 4 spiralförmig um den Mittelpunkt 34 der Fügefläche 12 gewunden. Durch die Vielzahl aneinander gereihter Schlaufen 38 kann die Fügefläche 13 mit geringst möglicher Bearbeitungszeit im Verhältnis zu den gewünschten kleinen Abständen zwischen den Schweißnahtabschnitten plattiert werden. Die Schlaufen 39 verbreitern gewissermaßen die Schweißnaht. Die spiralförmige Vorschubbahn 38 wird beim Anschweißen der Membran durch die Fahreinrichtung 25 (Fig. 1) ausgeführt, wobei eine rotierende Bewegung und eine radiale Bewegung des Werkstücks gegenüber dem Werkzeug ausgeführt wird. Die feinmaschigen Schlaufen 38 werden durch schnelle Steuerbewegungen der scannenden Laseroptik 21 (Fig. 1) generiert. Pendel- und Rotationsbewegungen des Laserstrahls zur Erzeugung der Schlaufen überlagern dabei die Vorschubbewegung der Fahreinrichtung bzw. des Werkstücks.

Um eine hohe Qualität der Schweißnaht zu gewährleisten, wird die Membran möglichst zügig nach der spanenden Formgebung des Grundkörpers angeschweißt. Dadurch wird vermieden, dass sich nach der Herstellung des Grundkörpers Oxidfilme an der Fügefläche bilden können, welche zu einer Versprödung der Schweißnaht führen können. Ist bei der Fertigung ein späteres Anschweißen der Membran nach der Formgebung des Grundkörpers vorgesehen, so kann der Bildung eines Oxidfilmes entgegen gewirkt werden, indem das Werkstück des Grundkörpers in einer Schutzatmosphäre, beispielsweise einem Edelgas, gelagert wird. Außerdem kann die Fügefläche zur Entfernung eines etwaigen Oxidfilms nachbehandelt werden, beispielsweise durch Schleifen.

Mit dem erfindungsgemäßen Anschweißen einer Membran mittels eines Faserlasers mit kontinuierlichem Laserstrahl lassen sich auch andere Bauteile als Druckmittler mit einer Membran aus edlerem Werkstoff plattieren. So können insbesondere Temperaturmessgeräte, welche zur Messung von aggressiven oder korrosiven Medien eingesetzt werden sollen, an den Kontaktflächen für das Messmedium mit einer Metallfolie aus Sonderwerkstoff plattiert werden.

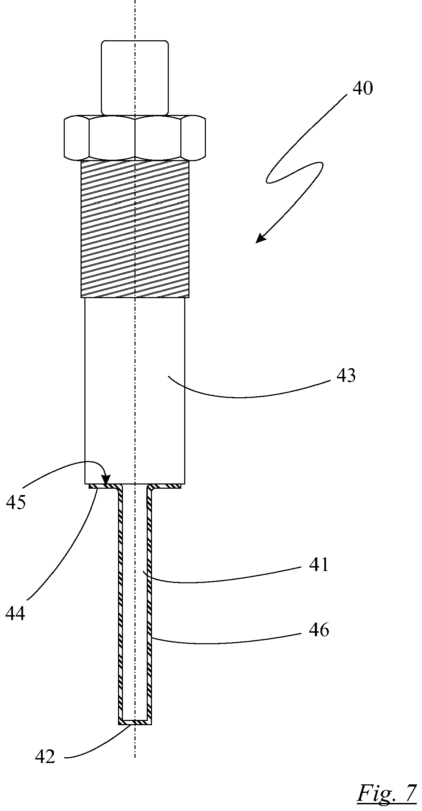

In Fig. 7 ist ein Temperatur-Messgerät 40 dargestellt, dessen stabförmiger Messfühler 41 durch eine Schutzhülse 42 aus korrosionsbeständigem Sonderwerkstoff geschützt ist.

Das Temperatur-Messgerät besteht aus einem Grundkörper 43 aus Edelstahl, welcher an seinem Ende den stabförmigen Messfühler 41 trägt. Der Messfühler 41 ist Bestandteil des Grundkörpers 43 und kann einstückig mit dem Grundkörper 43 ausgebildet sein. Im Einbauzustand ragt der Messfühler 41 in das Messmedium ein.

Die Schutzhülse 42 besteht aus einer Metallfolie aus Sonderwerkstoff wie Hastelloy und dergleichen. Die Schutzhülse 42 wird bei der Herstellung des Temperatur-Messgeräts 40 wie ein Überzug über den Messfühler 41 gestreift, so dass der Messfühler 41 vollständig abgedeckt ist und nicht mit dem Messmedium in Kontakt kommen kann.

Die Schutzhülse 42 ist mit einem radialen Kragen 44 ausgebildet, welcher an eine ringförmige Fügefläche 45 des Grundkörpers 43 im Bereich der Wurzel des Messfühlers 41 mittels eines Faserlasers mit kontinuierlich bewegtem Laserstrahl angeschweißt wird. Alternativ kann die Schutzhülse 42 auch an ihrem Mantel 46 umlaufend und vollflächig am Messfühler 41 angeschweißt werden.

## Patentansprüche

1. Funktionsbauteil mit einem metallischen Grundkörper (8) und einer Metallfolie aus metallischem korrosionsbeständigem Sonderwerkstoff, wobei die Metallfolie aus einem anderen Metall als der Grundkörper (8) besteht,
**dadurch gekennzeichnet,**
**dass** die Metallfolie aus Sonderwerkstoff mittels eines Faserlasers (2) mit einem kontinuierlich fortbewegten Laserstrahl (18) nach vorgegebenen Schweißparametern unter Bildung einer Schweißnaht (27) an einer Fügefläche (13) des Grundkörpers (8) angeschweißt ist, wobei die Vorschubgeschwindigkeit und die Strahlintensität des Laserstrahls (18) so abgestimmt sind, dass der lokale Wärmeeintrag unmittelbar nach dem Aufschmelzen beendet ist und das Schmelzbad aufgrund der hohen Temperaturgradienten mit hoher Abkühlgeschwindigkeit so rasch erstarrt, dass keine Bestandteile des Materials des Grundkörpers (8) bis zur abseits des Grundkörpers (8) liegenden Oberfläche (28) der Metallfolie vordringen, dass die Legierung der Schweißnaht (27) im Kontaktbereich zwischen dem Grundkörper (8) und der Metallfolie aus einer lokalen Mischgefügezone (26) besteht, in der die geschmolzenen Werkstoffe des Grundkörpers (8) und der Metallfolie vermischt sind, und
**dass** die Legierung der Schweißnaht (27) im Bereich der bzgl. des Grundkörpers (8) außen liegenden Oberfläche (28) der Metallfolie keine Bestandteile des Materials des Grundkörpers (8) enthält.

2. Funktionsbauteil nach Anspruch 1,
**dadurch gekennzeichnet, dass**
der Sonderwerkstoff der Metallfolie Hastelloy, Titan, Monel, Tantal, Nickel oder dergleichen ist.

3. Funktionsbauteil nach Anspruch 1 oder 2,
**gekennzeichnet durch**
einen derartigen Verlauf der Schweißnaht (27), dass Abschnitte einer durchlaufenden Bahn der Schweißnaht (27) auf der Fügefläche (13) nebeneinander liegen.

4. Funktionsbauteil nach einem der vorhergehenden Ansprüche,
**dadurch gekennzeichnet, dass**
die Metallfolie aus Sonderwerkstoff über die gesamte Fügefläche (13) angeschweißt ist.

5. Funktionsbauteil nach Anspruch 3 oder 4,
**dadurch gekennzeichnet, dass**
die Schweißnaht (27) in einer um einen Mittelpunkt (34) der Fügefläche (13) spiralförmig gewundenen Bahn oder in einer schlaufenförmigen Bahn angebracht ist.

6. Funktionsbauteil nach einem der Ansprüche 3 bis 5,
**dadurch gekennzeichnet, dass**
die Schweißnaht (27) entlang einer Vorschubbahn (38) in wiederkehrenden Schlaufen (39) angeordnet ist.

7. Funktionsbauteil nach einem der vorhergehenden Ansprüche,
**dadurch gekennzeichnet, dass**
das Funktionsbauteil ein Druckmittler (7) ist, der auf einer Seite ein Membranbett (10) und auf einer anderen Seite einen Anschluss (11) für ein Messgerät aufweist, wobei die Metallfolie aus Sonderwerkstoff als Membran (12) vor dem Membranbett (10) angeordnet ist und an eine das Membranbett (10) umgebende Fügefläche (13) angeschweißt ist, wobei ein Membranraum (14) zwischen Membran (12) und Membranbett (10) über einen den Grundkörper (8) durchsetzenden Kanal (15) mit dem Anschluss (11) für ein Messgerät in fluidischer Verbindung steht.

8. Laserstrahlschweißeinrichtung zum Anschweißen einer Metallfolie aus einem metallischen korrosionsbeständigen Sonderwerkstoff,
**gekennzeichnet durch**
- einen Faserlaser (2) mit kontinuierlichem Laserstrahl (18) zum Anschweißen der Metallfolie an einer Fügefläche (13) eines Grundkörpers (8), der aus einem anderen Metall als die Metallfolie besteht,
- eine Werkstückaufnahme (3),
- eine steuerbare Bewegungseinrichtung (4) zur Ausführung einer wenigstens zweidimensionalen Vorschubbewegung der Werkstückaufnahme (3) und des Laserstrahls (18) relativ zueinander,
- eine auf die Bewegungseinrichtung (4) wirkende Steuereinrichtung (5), der eine Datenbank (6) zugeordnet ist, in der werkstoff- und werkstückbezogene Schweißparametersätze (I, II, III) abgelegt sind und der Steuereinrichtung (5) vorgegeben werden, wobei die Schweißparametersätze (I, II, III) derart miteinander verknüpfte Angaben zu einer Geschwindigkeit V einer kontinuierlichen Vorschubbewegung und einer Strahlintensität des Laserstrahls (18) enthalten, dass die Legierung einer Schweißnaht (27) im Kontaktbereich zwischen dem Grundkörper (8) und der Metallfolie aus einer lokalen Mischgefügezone (26) besteht, in der sich die geschmolzenen Werkstoffe des Grundkörpers (8) und der Metallfolie vermischen, und die Legierung der Schweißnaht (27) im Bereich einer bzgl. des Grundkörpers (8) außen liegenden Oberfläche (28) der Metallfolie keine Bestandteile des Materials des Grundkörpers (8) enthält, wobei die Vorschubgeschwindigkeit und die Strahlintensität des Laserstrahls (18) so abgestimmt sind, dass der lokale Wärmeeintrag unmittelbar nach dem Aufschmelzen beendet ist und das Schmelzbad aufgrund der hohen Temperaturgradienten mit hoher Abkühlgeschwindigkeit so rasch erstarrt, dass keine Bestandteile des Materials des Grundkörpers (8) bis zur abseits des Grundkörpers (8) liegenden Oberfläche (28) der Metallfolie vordringen.

9. Laserstrahlschweißeinrichtung nach Anspruch 8,
**dadurch gekennzeichnet, dass**
der Faserlaser (2) eine Einrichtung (22') zur Einstellung seiner Ausgangsleistung umfasst, welche von der Steuereinrichtung (5) angesteuert wird, wobei in den vorgegebenen werkstoff- und werkstückbezogenen Schweißparametersätzen (I, II, III) Angaben über die Geschwindigkeit (V) der Vorschubbewegung mit Angaben zur Einstellung der Ausgangsleistung des Faserlasers (2) verknüpft sind.

10. Laserstrahlschweißeinrichtung nach Anspruch 8 oder 9,
**gekennzeichnet durch**
eine Fokussieroptik (22), welche Mittel zur Einstellung der Fokusparameter (F) Lage und/oder Durchmesser eines Fokus des Laserstrahls (18) umfasst, wobei die Fokussieroptik (22) von der Steuereinrichtung (5) angesteuert wird, und wobei in den vorgegebenen werkstoff- und werkstückbezogenen Schweißparametersätzen (I, II, III) die Strahlintensität des Laserstrahls (18) **durch** Fokusparameter (F) des Laserstrahls (18) repräsentiert ist.

11. Laserstrahlschweißeinrichtung nach einem der Ansprüche 8 bis 10,
**dadurch gekennzeichnet, dass**
die Bewegungseinrichtung (4) eine Laseroptik (21) des Faserlasers (2) mit mindestens einem steuerbaren Scannerspiegel (23) zur Lenkung des Laserstrahls (18) auf dem Werkstück umfasst und/oder die Bewegungseinrichtung (4) eine Fahreinrichtung (25) zur Ausführung einer Vorschubbewegung umfasst, welche die Werkstückaufnahme (3) und/oder die Laseroptik (21) trägt.

12. Verfahren zum Anschweißen einer Metallfolie aus metallischem korrosionsbeständigem Sonderwerkstoff,
**dadurch gekennzeichnet, dass**
die Metallfolie mit einem kontinuierlichen Laserstahl (18) eines Faserlasers (2) an einer Fügefläche (13) eines Grundkörpers (8), der aus einem anderen Metall als die Metallfolie besteht, angeschweißt wird, wobei der Laserstrahl nach vorgegebenen werkstoff- und werkstückbezogenen Schweißparametersätzen (I, II, III) mit einer derartigen Strahlintensität und darauf abgestimmter Geschwindigkeit (V) einer Vorschubbewegung über die Metallfolie geführt wird, dass die Legierung einer Schweißnaht (27) im Kontaktbereich zwischen dem Grundkörper (8) und der Metallfolie aus einer lokalen Mischgefügezone (26) besteht, in der sich die geschmolzenen Werkstoffe des Grundkörpers (8) und der Metallfolie vermischen, und die Legierung der Schweißnaht (27) im Bereich einer bzgl. des Grundkörpers (8) außen liegenden Oberfläche (28) der Metallfolie keine Bestandteile des Materials des Grundkörpers (8) enthält, wobei die Vorschubgeschwindigkeit und die Strahlintensität des Laserstrahls (18) so abgestimmt sind, dass der lokale Wärmeeintrag unmittelbar nach dem Aufschmelzen beendet ist und das Schmelzbad aufgrund der hohen Temperaturgradienten mit hoher Abkühlgeschwindigkeit so rasch erstarrt, dass keine Bestandteile des Materials des Grundkörpers (8) bis zur abseits des Grundkörpers (8) liegenden Oberfläche (28) der Metallfolie vordringen.

13. Verfahren nach Anspruch 12,
**dadurch gekennzeichnet, dass**
die Strahlintensität über eine veränderbare Ausgangsleistung des Faserlasers (2) und/oder über eine veränderbare Lage und/oder einen veränderbaren Durchmesser eines Fokus des Laserstrahls (18) eingestellt wird.

14. Verfahren nach Anspruch 12 oder 13,
**dadurch gekennzeichnet, dass**
die Vorschubbewegung durch eine Laseroptik (21) mit mindestens einem steuerbaren Scannerspiegel (23) ausgeführt wird.

15. Verfahren nach einem der Ansprüche 12 bis 14,
**dadurch gekennzeichnet, dass**
die Metallfolie aus Sonderwerkstoff als Membran (12) vor einem Membranbett (10) an eine das Membranbett (10) umgebende Fügefläche (13) mit folgenden Verfahrensschritten angeschweißt wird:
- die Membran (12) wird mit einer am äußeren Umfang der Fügefläche (13) umlaufenden Dichtnaht am Grundkörper (8) angeschweißt,
- ein Membranraum zwischen der Membran (12) und dem Membranbett (13) wird über einen den Grundkörper (8) durchsetzenden Kanal (15) evakuiert,
- die Membran (12) wird beginnend im Bereich eines inneren Umfangs der Fügefläche (13) entlang in einer um einen Mittelpunkt (34) der Fügefläche (13) spiralförmig gewundenen Bahn angebracht.

## Claims

1. Functional component having a metallic base body (8) and a metal foil of metallic corrosion-resistant special material, the metal foil consisting of a metal other than the base body (8),
**characterized**
**in that** the metal foil of special material is welded by means of a fibre laser (2) with a continuously moving laser beam (18) in accordance with predetermined welding parameters to a joining surface (13) of the base body (8), forming a weld seam (27), the feed speed and the beam intensity of the laser beam (18) being coordinated in such a way that the local heat input is terminated immediately after the melting and the molten bath solidifies so rapidly as a result of the high temperature gradients at a high cooling rate that no constituents of the material of the base body (8) advance to the surface (28) of the metal foil located away from the base body (8),
**in that** the alloy of the weld seam (27) in the contact region between the base body (8) and the metal foil consists of a local mixed-structure zone (26) in which the molten materials of the base body (8) and of the metal foil are mixed, and
**in that** the alloy of the weld seam (27) in the region of the surface (28) of the metal foil lying outside with respect to the base body (8) contains no constituents of the material of the base body (8).

2. Functional component according to claim 1,
**characterised in that**
the special material of the metal foil is Hastelloy, titanium, monel, tantalum, nickel or similar.

3. Functional component according to claim 1 or 2,
**characterized by**
such a course of the weld seam (27) that sections of a continuous path of the weld seam (27) on the joining surface (13) lying next to one another.

4. Functional component according to one of the preceding claims,
**characterised in that**
the metal foil of special material is welded over the entire joining surface (13).

5. Functional component according to claim 3 or 4,
**characterised in that**
the weld seam (27) is applied in a spirally wound path around a center (34) of the joining surface (13) or in a loop-shaped path.

6. Functional component according to any of claims 3 to 5,
**characterised in that**
the weld seam (27) is arranged along a feed path (38) in recurring loops (39).

7. Functional component according to one of the preceding requirements,
**characterised in that**
the functional component is a diaphragm seal (7) which has a diaphragm bed (10) on one side and a connection (11) for a measuring instrument on the other side, the metal foil of special material being arranged as a diaphragm (12) in front of the diaphragm bed (10) and being welded to a joining surface (13) surrounding the diaphragm bed (10), wherein a membrane space (14) between the membrane (12) and the membrane bed (10) is in fluid connection with the connection (11) for a measuring instrument via a channel (15) passing through the base body (8).

8. Laser beam welding device for welding on a metal foil of a metallic corrosion-resistant special material,
**characterized by**
- a fiber laser (2) with a continuous laser beam (18) for welding the metal foil to a joining surface (13) of a base body (8) which consists of a metal other than the metal foil,
- a workpiece holder (3),
- a controllable movement device (4) for executing an at least two-dimensional feed movement of the workpiece holder (3) and the laser beam (18) relative to one another,
- a control device (5) which acts on the movement device (4) and to which is assigned a database (6) in which material- and workpiece-related welding parameter sets (I, II, III) are stored and are specified to the control device (5), the welding parameter sets (I, II, III) containing information, linked to one another in such a way, on a speed V of a continuous feed movement and on a beam intensity of the laser beam (18), that the alloy of a weld seam (27) in the contact region between the base body (8) and the metal foil consists of a local mixed-structure zone (26) in which the molten materials of the base body (8) and the metal foil are mixed,
and the alloy of the weld seam (27) in the region of a surface (28) of the metal foil lying outside with respect to the base body (8) does not contain any constituents of the material of the base body (8), the feed rate and the beam intensity of the laser beam (18) being coordinated in such a way that the local heat input is terminated immediately after the melting and the molten bath solidifies so rapidly as a result of the high temperature gradients at a high cooling rate that no constituents of the material of the base body (8) advance to the surface (28) of the metal foil located away from the base body (8).

9. Laser beam welding equipment according to claim 8,
**characterised in that**
the fiber laser (2) comprises a device (22') for setting its output power, which is controlled by the control device (5), wherein in the predetermined material- and workpiece-related welding parameter sets (I, II, III) information about the speed (V) of the feed movement is combined with information about setting the output power of the fiber laser (2).

10. Laser beam welding equipment according to claim 8 or 9,
**characterized by**
a focusing optics (22) which comprises means for setting the focus parameters (F) position and/or diameter of a focus of the laser beam (18), wherein the focusing optics (22) is controlled by the control device (5), and wherein the beam intensity of the laser beam (18) is represented by focus parameters (F) of the laser beam (18) in the predetermined material- and workpiece-related welding parameter sets (I, II, III).

11. Laser beam welding apparatus according to any of claims 8 to 10,
**characterised in that**
the movement device (4) comprises a laser optics (21) of the fibre laser (2) with at least one controllable scanner mirror (23) for guiding the laser beam (18) on the workpiece and/or the movement device (4) comprises a travelling device (25) for carrying out a feed movement which carries the workpiece holder (3) and/or the laser optics (21).

12. Method for welding on a metal foil of metallic corrosion-resistant special material,
**characterised in that**
metal foil is welded with a continuous laser beam (18) of a fiber laser (2) to a joining surface (13) of a base body (8) which consists of a metal other than the metal foil, the laser beam being guided over the metal foil according to predetermined material- and workpiece-related welding parameter sets (I, II, III) with such a beam intensity and a speed (V) of a feed movement coordinated thereto, that the alloy of a weld seam (27) in the contact region between the base body (8) and the metal foil consists of a local mixed-structure zone (26) in which the molten materials of the base body (8) and the metal foil are mixed, and the alloy of the weld seam (27) in the region of a surface (28) of the metal foil lying on the outside with respect to the base body (8) does not contain any constituents of the material of the base body (8), the feed rate and the beam intensity of the laser beam (18) being coordinated in such a way that the local heat input is terminated immediately after the melting and the molten bath solidifies so rapidly as a result of the high temperature gradients at a high cooling rate that no constituents of the material of the base body (8) advance to the surface (28) of the metal foil located away from the base body (8).

13. Method according to claim 12,
**characterised in that**
the beam intensity is set via a variable output power of the fiber laser (2) and/or via a variable position and/or a variable diameter of a focus of the laser beam (18).

14. Method according to claim 12 or 13,
**characterised in that**
the feed movement is carried out by laser optics (21) having at least one controllable scanner mirror (23).

15. Method in accordance with any of claims 12 to 14,
**characterised in that**
the metal foil of special material is welded as a membrane (12) in front of a membrane bed (10) to a joining surface (13) surrounding the membrane bed (10) with the following method steps:
- the diaphragm (12) is welded to the base body (8) with a sealing seam surrounding the outer circumference of the joining surface (13),
- a membrane space between the membrane (12) and the membrane bed (13) is evacuated via a channel (15) passing through the base body (8),
- the membrane (12) is attached starting in the region of an inner circumference of the joining surface (13) along in a spirally wound path around a center (34) of the joining surface (13).

## Revendications

1. Composant fonctionnel, pourvu d'un corps de base (8) métallique et d'un film métallique composé d'une matière métallique spéciale résistant à la corrosion, le film métallique étant constitué d'un métal différent de celui du corps de base (8),
**caractérisé**
**en ce que** le film métallique en matière spéciale est soudé à l'aide d'un laser à fibre optique (2) avec un faisceau laser (18) déplacé en continu, en créant un joint de soudure (27) sur une surface d'assemblage (13) du corps de base (8), la vitesse d'avance et l'intensité du faisceau laser (18) étant adaptés de telle sorte que l'apport thermique local prenne fin directement après la fusion et que du fait du gradient thermique élevé, le bain de fusion se fige à vitesse de refroidissement élevée si rapidement qu'aucun constituant de la matière du corps de base (8) ne progresse jusqu'à la surface (28) du film métallique située à l'écart du corps de base (8),
**en ce que** l'alliage du joint de soudure (27) dans la zone de contact entre le corps de base (8) et le film métallique consiste dans une zone locale de structure mixte (26), dans laquelle les matières fondues du corps de base (8) et le film métallique sont mélangés et
**en ce que** l'alliage du joint de soudure (27) dans la région de la surface (28) du film métallique située à l'extérieur en rapport au corps de base (8) ne contient aucun constituant de la matière du corps de base (8).

2. Composant fonctionnel selon la revendication 1,
**caractérisé en ce que**
la matière spéciale du film métallique est de l'Hastelloy, du titane, du Monel, du tantale, du nickel ou similaires.

3. Composant fonctionnel selon la revendication 1 ou 2,
**caractérisé par**
un trajet du joint de soudure (27), tel que des portions d'une trajectoire continue du joint de soudure (27) se situent côte à côte sur la surface d'assemblage (13).

4. Composant fonctionnel selon l'une quelconque des revendications précédentes,
**caractérisé en ce que**
le film métallique en matière spéciale est soudé sur l'ensemble de la surface d'assemblage (13).

5. Composant fonctionnel selon la revendication 3 ou 4,
**caractérisé en ce que**
le joint de soudure (27) est élaboré sur une trajectoire tordue en forme de spirale autour d'un point médian (34) de la surface d'assemblage (13) ou dans une trajectoire en forme de boucle.

6. Composant fonctionnel selon l'une quelconque des revendications 3 à 5,
**caractérisé en ce que**
le joint de soudure (27) est placé le long d'une trajectoire d'avance (38) dans des boucles (39) récurrentes.

7. Composant fonctionnel selon l'une quelconque des revendications précédentes,
**caractérisé en ce que**
le composant fonctionnel est un séparateur (7) qui comporte sur une face un lit de membrane (10) et sur une autre face un raccord (11) destiné à un instrument de mesure, le film métallique en matière spéciale étant placé sous la forme de membrane (12) à l'avant du lit de membrane (10) et étant soudé sur une surface d'assemblage (13) entourant le lit de membrane (10), entre la membrane (12) et le lit de membrane (10), un compartiment de membrane (14) se trouvant en liaison fluidique par l'intermédiaire d'un canal (15) traversant le corps de base (8) avec le raccord (11) destiné à un instrument de mesure.

8. Dispositif de soudage au laser, destiné à souder un film métallique composé d'une matière métallique spéciale, résistant à la corrosion,
**caractérisé par**
- un laser à fibre optique (2) pourvu d'un faisceau laser (18) continu, destiné à souder le film métallique sur une surface d'assemblage (13) d'un corps de base (8), qui consiste dans un métal différent de celui du film métallique,
- un logement de pièce (3),
- un dispositif de déplacement (4) susceptible d'être commandé, destiné à effectuer un déplacement d'avance au moins bidimensionnel du logement de pièce (3) et du faisceau laser (18) l'un par rapport à l'autre,
- un dispositif de commande (5) agissant sur le dispositif de déplacement (4) auquel est affectée une base de données (6) dans laquelle sont sauvegardés et prédéfinis à l'attention du dispositif de commande (5) des jeux de paramètres de soudage relatifs à la matière et à la pièce à usiner (I, II, III), les jeux de paramètres de soudage (I, II, III) contenant des informations concernant une vitesse (V) d'un déplacement d'avance continu et d'une intensité du faisceau laser (18) interconnectées de telle sorte que l'alliage d'un joint de soudure (27) dans la zone de contact entre le corps de base (8) et le film métallique consiste dans une zone locale de structure mixte (26), dans laquelle les matières fondues du corps de base (8) et le film métallique se mélangent et que l'alliage du joint de soudure (27) dans la région d'une surface (28) du film métallique située à l'extérieur en rapport au corps de base (8) ne contienne aucun constituant de la matière du corps de base (8), la vitesse d'avance et l'intensité du faisceau laser (18) étant adaptés de telle sorte que l'apport thermique local prenne fin directement après la fusion et que du fait du gradient thermique élevé, le bain de fusion se fige à vitesse de refroidissement élevée si rapidement qu'aucun constituant de la matière du corps de base (8) ne progresse jusqu'à la surface (28) du film métallique située à l'écart du corps de base (8).

9. Dispositif de soudage au laser selon la revendication 8,
**caractérisé en ce que**
le laser à fibre optique (2) comprend un dispositif (22') destiné à régler sa puissance de sortie, lequel est activé par le dispositif de commande (5), dans les jeux de paramètres de soudage prédéfinis relatifs à la matière et à la pièce à usiner (I, II, III), des informations concernant la vitesse (V) du déplacement d'avance étant interconnectées avec des informations concernant le réglage de la puissance de sortie du laser à fibre optique (2).

10. Dispositif de soudage au laser selon la revendication 8 ou 9,
**caractérisé par**
une optique de focalisation (22), laquelle comprend des moyens destiné à régler les paramètres de focalisation (F) consistant dans la position et/ou le diamètre d'un point focal du faisceau laser (18), l'optique de focalisation (22) étant activée par le dispositif de commande (5) et dans les jeux de paramètres de soudage prédéfinis relatifs à la matière et à la pièce à usiner (I, II, III), l'intensité du faisceau laser (18) étant représentée par des paramètres de focalisation (F) du faisceau laser (18).

11. Dispositif de soudage au laser selon l'une quelconque des revendications 8 à 10,
**caractérisé en ce que**
le dispositif de déplacement (4) comprend une optique à laser (21) du laser à fibre optique (2) pourvue d'au moins un miroir de balayage (23) susceptible d'être commandé, destiné à diriger le faisceau laser (18) sur la pièce à usiner et/ou le dispositif de déplacement (4) comprend un dispositif de translation (25), destiné à effectuer un déplacement d'avance, lequel porte le logement de pièce (3) et/ou l'optique à laser (21).

12. Procédé, destiné à souder un film métallique composé d'une matière métallique spéciale résistant à la corrosion,
**caractérisé en ce**
**qu'**on soude le film métallique à l'aide d'un faisceau laser (18) continu d'un laser à fibre optique (2) sur une surface d'assemblage (13) d'un corps de base (8) qui est constitué d'un métal différent de celui du film métallique, le faisceau laser étant guidé selon des jeux de paramètres de soudage prédéfinis relatifs à la matière et à la pièce à usiner (I, II, III) avec une intensité de faisceau et une vitesse (V) adaptée à celle-ci d'un déplacement d'avance au-dessus du film métallique de telle sorte que l'alliage d'un joint de soudure (27) dans la zone de contact entre le corps de base (8) et le film métallique consiste dans une zone locale de structure mixte (26) dans laquelle les matières fondues du corps de base (8) et le film métallique se mélangent et que l'alliage du joint de soudure (27) dans la région de la surface (28) du film métallique située à l'extérieur en rapport au corps de base (8) ne contienne aucun constituant de la matière du corps de base (8), la vitesse d'avance et l'intensité du faisceau laser (18) étant adaptés de telle sorte que l'apport thermique local prenne fin directement après la fusion et que du fait du gradient thermique élevé, le bain de fusion se fige à vitesse de refroidissement élevée si rapidement qu'aucun constituant de la matière du corps de base (8) ne progresse jusqu'à la surface (28) du film métallique située à l'écart du corps de base (8).

13. Procédé selon la revendication 12,
**caractérisé en ce**
**qu'**on règle l'intensité du faisceau via une puissance de sortie variable du laser à fibre optique (2) et/ou via une position variable et/ou via un diamètre variable d'un point focal du faisceau laser (18).

14. Procédé selon la revendication 12 ou 13,
**caractérisé en ce que**
le déplacement d'avance est effectué par une optique à laser (21) pourvue d'au moins un miroir de balayage (23) susceptible d'être commandé.

15. Procédé selon l'une quelconque des revendications 12 à 14,
**caractérisé en ce**
**qu'**on soude le film métallique en matière spéciale sous la forme d'une membrane (12) à l'avant d'un lit de membrane (10) sur une surface d'assemblage (13) entourant le lit de membrane (10) à l'aides des étapes de procédé suivantes :
- on soude la membrane (12) sur le corps de base (8) à l'aide d'une soudure étanche périphérique sur la circonférence extérieure de la surface d'assemblage (13),
- on évacue un compartiment de membrane entre la membrane (12) et le lit de membrane (13) par l'intermédiaire d'un canal (15) traversant le corps de base (8),
- on applique la membrane (12) en commençant dans la région d'une circonférence intérieure de la surface d'assemblage (13) le long d'une trajectoire tordue en forme de spirale autour d'un point médian (34) de la surface d'assemblage (13) .
